# EUROPEAN PATENT APPLICATION

(11) **EP 3 085 732 A1**
(43) Date of publication of application: **26.10.2016**
(21) Application number: 15305624.7
(22) Date of filing: 23.04.2015
(51) Int. Cl.: C08K 3/16, C08K 5/14, C08L 95/00

(54) **OXIDANT-MODIFIED BITUMINOUS BINDER COMPOSITION**

(71) Applicant: COLAS, 92100 Boulogne-Billancourt (FR)
(72) Inventor: M. THACHANPARAMBATH KUTTAPPA, Subhaash, Navi Mumbai - 400 705 (IN)
(74) Representative: Jacobacci Coralis Harle

(57) **Abstract**

The invention relates to a process for preparing a bituminous binder composition for making layers and/or coatings for road construction and/or civil engineering, comprising mixing a bituminous binder comprising an initial bitumen and at least one oxidizing agent, and obtaining a bituminous binder composition comprising a final bitumen. The invention also relates to the use of at least one oxidizing agent for improving the resistance to permanent deformation of a bituminous binder as well as permanent deformation of asphalt mix using such bituminous binder.

## Description

The present invention relates to a modified bituminous binder composition that can be used in all the applications of bituminous binders, in particular for making layers and/or coatings for road construction and/or civil engineering, a method for preparing the same and the use of oxidizing agents for improving the resistance to permanent deformation of a bituminous binder.

Bitumen, residue from crude oil distillation, is a complex material basically composed of hydrocarbons along with some other molecules which contain small percentages of heteroatoms (sulfur, nitrogen and oxygen). It is a black viscoelastic solid at room temperature that turns into a viscous liquid as temperature increases. Bitumen presents unique adhesive and waterproofing properties that make this material particularly ideal to bind together aggregates.

Bitumen compounds can be classified by chromatographic techniques into four different fractions (usually referred to as "SARAs"): Saturates, Aromatics, Resins (which make up the maltenes) and Asphaltenes. Bitumen physicochemical and rheological properties strongly depend on both temperature and the relative proportion of the "SARAs" fractions.

In order to prepare an asphalt concrete mix, bitumens can be brought to a high enough temperature (usually above 150°C) to reach a sufficiently low viscosity to be directly mixed with dried and preheated aggregate material. They can also be used for the manufacturing of warm asphalt mixes or foam asphalt mixes.

However, bitumen can also be emulsified using appropriate surfactants. Mixing can then be carried out at ambient temperature. Aside from this advantage, the interest of emulsifying bitumen is that bitumen maintains its adhesive properties toward minerals in the presence of water, due to the use of surfactants. This is particularly interesting in road construction, as aggregates have been prepared in the open air and are therefore moist..

Bitumen is the only deformable component in asphalt mixtures and constitutes the continuous phase. In this sense, the viscoelastic properties of bitumen, over a wide range of temperatures and loadings, are of major importance for pavement performance.

However, when the rheological properties of the bituminous binder are not good enough, some road distresses may arise at both high and low in-service temperatures (namely, permanent deformation/rutting due to binder low stiffness, and thermal cracking, respectively) as a consequence of the combined action of traffic loads and weathering.

In order to mitigate their effects, improved modified binders have been developed by the paving industry over the last decades. Bitumen properties have been traditionally improved through the addition of various chemicals such as virgin polymers (styrene-butadiene polymers such as SBS and SBR, ethylene vinyl acetate polymers, polyethylenes, etc.), waste polymers (plastics from agriculture, ground tire rubber, etc.), adhesion promoters, polyphosphoric acid, sulfur, natural asphalt. However, in addition to being quite difficult to manufacture, polymer-modified binders also have high viscosity and require higher mix and paving temperatures.

Bitumens can also be modified by hardening. Hard binders are generally produced in refinery plants, either by direct distillation or through oxidation. There are not a lot of refinery plants using the direct distillation process, while bitumen oxidation is a costly process that requires high temperatures or specific catalysts, which are usually harmful to environment. Thus, the supply of hard binders is sometimes difficult.

Oxidized bitumen can be produced by oxidation with oxygen or air. The degree of oxidation can range from very small, often referred to as air-rectification, or semi-blowing, which only slightly modifies the bitumen properties, through to "full" blowing, whereby the properties of the bitumen are significantly altered. Air blowing is a process by which compressed air is blown into a bitumen feedstock typically at 230-260°C and results in bitumen hardening. This process gives the bitumen more rubbery properties, raises the softening-point and viscosity of the bitumen but involves high temperatures and requires special equipment.

Thus, it would be desirable to provide a new method for obtaining a modified, hard bituminous binder, which would deliver bituminous binder based layers with improved rheological properties and performance at high temperatures, without using special bitumen. Said bituminous binder should have a good resistance to aging, satisfactory adhesive properties to surrounding layers, resistance against fatigue, mechanical resistance under most of traffic types and stiffness against rutting, a pleasant outward appearance, and an easy implementability, both as regards the production process and the application.

The present inventors have found an alternative to classic bitumen modification with polymers, natural asphalt or air blowing, involving the use of an oxidizing agent for modifying bituminous binders and obtaining asphalt pavements with enhanced durability.

These objectives have been met by a process for the preparation of a bituminous binder composition for making layers and/or coatings for road construction and/or civil engineering, comprising:
a) a bituminous binder comprising an initial bitumen and at least one oxidizing agent,
b) obtaining a bituminous binder composition comprising a final bitumen.

The foregoing and other objects, features and advantages of the present invention will become readily apparent to those skilled in the art from a reading of the detailed description hereafter.

As used herein, a modified bituminous binder composition or engineered bituminous binder composition is intended to mean a bituminous binder composition that has been modified by the use of at least one oxidizing agent. Said binder can also be modified by other chemical additives.

As used herein, a "bituminous binder" refers to a bituminous compound selected from pure or modified bitumens, or their combinations, which is able to harden and to adhere to the layer onto which it is deposited and/or bind granular materials together when granular materials are present. The bituminous binder of the invention is generally a mixture of natural hydrocarbon matters derived from the heavy end of a crude oil distillation or collected in natural oil reservoirs in a liquid or a solid form, and with densities generally ranging from 0.8 to 1.2. It may be obtained through any conventional method. Direct distillation bitumens, synthetic bitumens, in particular those that may be colored, de-asphalting or oxidized bitumens may be cited. Other examples of bituminous binders that may also be mentioned are acidic bitumens, in particular those wherein the acid is naphthenic acid or a derivative thereof.

Bitumens are classified into several types or grades, based on viscosity/hardness. Considered as suitable according to the present invention are for instance pure bitumens as defined by the NF EN-12591 standard, such as bitumens of classes 160/220, 100/150, 70/100, 50/70, 40/60, 35/50, 30/45 or 20/30, without any limitation. These standardized classes correspond to penetration ranges at 25°C determined through the EN-1426 penetration grade method and are expressed in 10⁻¹ mm.

The bitumen generally represents from 25 to 100 %, preferably from 50 to 100 %, more preferably from 50 to 98 %, even more preferably from 65 to 90 % by weight as compared to the total weight of the bituminous binder.

Although the bituminous binder according to the invention does preferably not comprise any polymer additives, it can be modified by incorporation of additives of any kind to control its properties, such as additives to promote the adhesion or "bonding" of the composition, i.e. the ability of the bituminous binder to come into contact with the bodies present, such as gravel and granulates, or to improve the mechanical resistance under high traffic or aggressive driving, viscosifiers, setting regulators, stabilizers, thickeners, salts, an acid, an alkali. Included are bitumens improved by addition of mineral or organic fillers, such as fibers, especially of glass, carbon or cellulose, cement, lime, silica or carbon black, by incorporation of polymers or copolymers (under an appropriate form such as a latex), for example natural or synthetic elastomers of the rubber powder type (polybutadiene, styrene-butadiene rubber or SBR), copolymers of ethylene and vinyl acetate (EVA), statistical or block copolymers of styrene and conjugated dienes, for example SBS (styrene-butadiene-styrene) block copolymers, by incorporation of thermoplastics, such as for example, polyolefins (polyethylene, polypropylene), polyamides and polyesters, or by incorporation of thermosetting resins such as epoxy resins (bitumen / epoxy binders) or polyurethane resins, various other organic resins or recycled rubber crumbs. This list is obviously not exhaustive. It is of course also possible to use mixtures of different types of bitumens.

As an acid, phosphoric acid and its derivatives, salts and esters, hydrochloric acid and any acid or acid combination can be mentioned for example. As an alkali, organic and mineral alkalis can be mentioned such as for example polyamines, imidazolines, pyrrolidines, soda, lime or potash.

The bituminous binder composition used in the invention may include catalysts, in particular curing catalysts, such as metal salts and/or one or more coloring agents, such as inorganic pigments or organic dyes.

The bituminous binder may also be fluxed/fluidified with a flux or with a plasticizer so as to reduce its viscosity, for example a flux based on solvents derived from petroleum or from petrochemicals or carbochemicals (e.g., light petroleum solvents such as kerosene, oils from coal or from petroleum), or a flux of natural origin based on vegetable and/or animal fatty substances that are renewable and non-toxic. These bituminous binders may optionally contain 0.5 to 35% of fluxing agent, preferably from 0.5 to 10% by weight based on the binder total weight.

The composition according to the invention comprises at least one oxidizing agent/oxidant present in an amount ranging from 0.5 to 20 % by weight, relative to the composition total weight, preferably from 1 to 15 % by weight, more preferably from 3 to 10 % by weight, even more preferably from 5 to 10 % by weight.

The added oxidizing agent is not dioxygen (O₂ gas) and is preferably not ozone. It is preferably not a gaseous oxidant. Various oxidizing agents can be used, including nitric acid and salts thereof, chromic or bromic acid and salts thereof, dichromates, osmium oxide, persalts such as perborates, percarbonates, persulfates and permanganates, hypochlorous acid and salts thereof, 7,7,8,8-tetracyanoquinodimethane (TCNQ) derivatives having a strong electron attracting group, such as a cyano group and a nitro group, and peroxides. The preferred oxidizing agents are hypochlorous acid, hypochlorite salts such as sodium hypochlorite or calcium hypochlorite and peroxides, the most preferred ones being peroxides.

Various peroxides can be used, including, without limitation, peroxycarboxylic acids RCO₃H such as meta-chloroperoxybenzoic acid, benzoyl peroxide, cumene hydroperoxide, tert-butyl hydroperoxide, dicumyl peroxide, 2,5-bis(tert-butylperoxy)-2,5-dimethylhexane, bis(tert-butyldioxyisopropyl) benzene, 1,1-di(tert-butylperoxy)-3,3,5-trimethylcyclohexane, ketone peroxides, hydrogen peroxide. Any salt of hydroperoxide compounds can also be used, such as a salt of hydrogen peroxide, for example sodium peroxide. However, peroxides are preferably used under a non-salt form. Although the peroxide can be an organic peroxide, hydrogen peroxide and salts thereof are the most preferred peroxides. Among peroxides, one preferably uses hydroperoxides that are soluble in aqueous solutions and can be easily incorporated into the present composition. An advantage of peroxides, when used under a non-salt form, over oxidants used under a salt form is the fact that they do not generate salts side-products that would remain in the bituminous binder after the oxidation reaction took place.

The oxidizing agent (preferably a peroxide, more preferably hydrogen peroxide or a salt thereof) is preferably introduced in the bituminous binder as a liquid solution, preferably an aqueous solution.

It has been observed that by usage of an oxidizing agent, the rheological and mechanical performance aspects of the bitumen residue obtained after application of the bituminous binder composition and curing were improved significantly.

The initial bitumen is converted to a final bitumen by action of the oxidizing agent. Without wishing to be bound by any theory, the inventors believe that the oxidizing agent form oxygen bridges with hydrocarbon chains of bitumen, thus forming a tridimensional network by polymerization. The final bitumen is an oxidized bitumen that has been oxygen-enriched.

The oxidizing agent makes the bitumen harder. In other words, the penetration grade of the final bitumen is decreased as compared to the initial bitumen, which is an improvement in many applications such as the production of tack coats. Preferably, the penetration grade of the final bitumen is decreased by at least one grade as defined in the EN-12591 standard as compared to the initial bitumen, more preferably by at least two grades, even more preferably by at least three grades. For example, a 70/100 initial bitumen can be converted, i.e., upgraded, to a 40/60 bitumen by the process of the invention, and even to a 20/30 bitumen. Hardening can be controlled by the bitumen temperature, the reaction time with the oxidizing agent and the amount of oxidizing agent used, as a higher number of oxygen bridges increases the hardness of bitumen.

In one embodiment of the invention, the bituminous binder composition comes as an emulsion form. As is well known, a bitumen emulsion is composed of a bituminous phase and an aqueous phase, one of said phases being dispersed under the form of discontinuous droplets in a continuous phase of the other. Bitumen emulsions employed in the road industry are generally direct, which means that the dispersed phase is the bituminous phase.

Emulsions of bituminous binder are conventionally prepared by mixing a dispersed phase and a dispersing aqueous phase in a suitable mixer, which generally produces a shear of phases present during mixing, or by phase inversion. The dispersed phase can comprise either pure bitumen or bitumen mixed with a flux, a fluidifying agent and/or additives such as polymers. The dispersing aqueous phase comprises, in particular, water and one or more emulsifiers, in particular surfactants, more preferably organic surfactants, in order to improve the binder-water affinity. The emulsifier contributes to stabilizing the emulsion, adjusting the average size of the droplets and their narrow distribution.

When the bituminous binder composition of the present invention is used as an emulsion, hardening of bitumen can be initiated during the preparation of the emulsion (i.e., in the mixing apparatus), or after the emulsion has been prepared, depending on when the oxidizing agent is employed. The oxidizing agent can be added in the bituminous binder emulsion in a variety of manners. For example, it can be mixed (partially or totally) with the dispersing aqueous phase or the bituminous binder before or during the step of mixing the dispersing aqueous phase and the bituminous binder, i.e., before a bituminous binder emulsion has been formed.

A common grading measure for bitumen is the penetration or "pen" value. The penetration value is based on penetration testing where the relative hardness of the asphalt composition is determined at a predetermined temperature, typically about 25°C. One test uses the methods described in ASTM D5, EN-12591 and/or AASHTO T49 (American Association of State Highway and Transportation Officials). This test measures the distance (penetration value) in tenths of a millimeter that a standard needle, under a standard loading, will penetrate a sample in a given time under known temperature conditions. The penetration test is used as a measure of consistency. Higher values of penetration indicate softer consistency.

Other common measures of asphalt compositions are the Ring and Ball Softening Point and the viscosity. The softening point test uses the methods described in ASTM D36 and/or AASHTO T53, and measures the temperature at which an asphalt composition becomes soft and flowable. It is indicative of the tendency of the material to flow at elevated temperatures encountered in service. The viscosity of bituminous materials can be determined according to the ASTM D2171 test method, at 60°C, to characterize the flow behavior.

The modification of the bituminous binder with an oxidizing agent, whatever the time the modification occurs, advantageously modifies both the penetration and softening point values of the final bitumen as compared to the initial bitumen. As used herein, pen values and softening points are with reference to the above-identified ASTM and AASHTO methods.

The performance grading in the PG system of the so modified binder composition is found to be modified significantly as well, particularly at high temperatures, which is advantageous for the preparation of coating materials. This system defines climate-related optimal working conditions of bituminous binders through specifications for high and low temperature properties of asphalt concrete that correlate to road performance. The high temperature in the PG system, as defined in AASHTO standard M 320, represents the maximum pavement temperature at normal traffic loads. The modification of the binder with an oxidizing agent increases this upper performance grade of the bituminous binder, which can be correlated with an increase in rutting resistance.

Finally, it will be noted that the process of the invention can be carried out on conventional plants designed for the manufacture of bituminous binders by means of minor modifications, namely installing a tank for the oxidizing agent and a transfer line comprising dosing units. Incorporation of the oxidizing agent in the bitumen tank can be simply performed using a dip-tube, in particular when the oxidizing agent is added as a liquid solution.

An advantage of said process over the air blowing process is that modification of bitumen occurs much more rapidly. Further, the present invention does not require the use of special bitumen, as a hard bitumen is produced starting from traditional bitumen.

According to another of its aspects, the invention relates to the use of an oxidizing agent for improving the resistance to permanent deformation of a bituminous binder, and therefore permanent deformation of asphalt mix using such bituminous binder.

Indeed, an advantage of the engineered bituminous binder compositions according to the invention is that they provide coatings that better resist to permanent deformation, especially at high in-service temperatures, which leads to improved flexibility and thermal cracking resistance.

This use of oxidizing agents is generally associated to a decrease of the bituminous binder penetration grade by at least one grade as defined in the EN-12591 standard.

The bituminous binder compositions of the invention can be used in a variety of industrial applications, such as road surfacing applications (construction and maintenance of road surfaces) and the building industry. They can be used either alone or in the presence of aggregates, in particular for the preparation of surface dressings, tack coats, curing layers, bituminous coatings, emulsion base courses, bituminous slurries or cold-cast coatings, hot asphalt mixes, warm asphalt mixes, foam asphalt mixes, road markings, primer coatings for concrete structures or alternatively to ensure the leak tightness of foundations. An asphalt concrete/bituminous concrete/asphalt mix is defined as being a material comprising mineral particles, which are bound together through a bituminous binder. It is preferably intended to the wearing course, the binder course or the base course of a pavement. In this embodiment, the bituminous binder composition preferably represents from 3 to 15 % of the material total weight.

Modification of the bituminous binder composition by an oxidizing agent thus results in an economical and sustainable paving practice, which leads to prolong asphalt pavements lifetime even in harshly hot weather.

The examples below are given by way of illustration.

### Examples

### I. Materials and methods

Bitumen with a penetration grade of 70/100 or 50/70 has been used as base material for the composition. Hydrogen peroxide and calcium hypochlorite (Ca(ClO)₂) were used as oxidants. Hydrogen peroxide is a colorless liquid that is slightly more viscous than water in its pure form. For safety reasons, it was used as a 50 % by weight aqueous solution.

Penetration of the bituminous materials was determined according to the ASTM D5 test method. The viscosity of the bituminous materials was determined according to the ASTM D2171 test method. Higher values of penetration indicate softer consistency.

The viscosity of the bituminous materials was determined according to the ASTM D2171 test method, at 60°C, or at 135°C, to characterize the flow behavior.

The softening point of the bituminous materials was determined according to the ASTM D36 test method, using a Ring-and-Ball Apparatus.

The high temperature in the performance grading (PG) system of the bituminous materials was determined according to the method defined in AASHTO standard M 320. An increase in this upper performance grade of bituminous binder helps a road resist rutting.

The aging of the bituminous materials was studied using the rolling thin film oven test (RTFOT) according to the EN 12607-1 standard. In this test, a thin film of bitumen is continuously rotated around the inner surface of a glass jar at 163° C for 75 minutes with an injection of hot air into the jar every 3 to 4 seconds.

### II. Preparation of the binders and test results

The following binders were prepared by direct mixing of bitumen and 3 wt. % hydrogen peroxide solution or 1-7 % by weight of calcium hypochlorite for 1 h, at 120°C, in a cylindrical vessel (60 mm diameter, 140 mm height). A low-shear mixer (Silversson Mixer) equipped with stirrer, was used at a rotating speed of 1200 rpm. Since hydrogen peroxide was used as an aqueous solution, significant volume expansion of bitumen was observed. Care was taken to ensure all safety precautions with sufficient ullage to take into account volume expansion.

The binders were tested immediately after water evaporation. The results of the tests that were performed before and after modification with the oxidizing agents are shown in the table below.

| Example | Comparative 1 | 1 |
|---|---|---|
| Binder | Bitumen 70/100 | Bitumen 70/100 + 3 wt. % H₂O₂ solution |
| Penetration at 25°C (1/10 mm) | 85 | 40 |
| Softening Point (°C) | 43 | 52 |
| Viscosity at 60°C (Poise) | 1200 | 4200 |

| Example | Comp. 2 | 2 | 3 | 4 | 5 | 6 | 7 | 8 |
|---|---|---|---|---|---|---|---|---|
| Binder | Bitumen 50/70 | Bitumen 50/70 + 1 % Ca(ClO)₂ | Bitumen 50/70 + 2% Ca(ClO)₂ | Bitumen 50/70 + 3% Ca(ClO)₂ | Bitumen 50/70 + 4% Ca(ClO)₂ | Bitumen 50/70 + 5% Ca(ClO)₂ | Bitumen 50/70 + 6% Ca(ClO)₂ | Bitumen 50/70 + 7% Ca(ClO)₂ |
| Penetration at 25°C (1/10 mm) | 62 | 47 | 45 | 44 | 32 | 29 | 30 | 28 |
| Softening Point (°C) | 45 | 46.3 | 48.9 | 50.2 | 50.9 | 51.2 | 52 | 53.2 |
| Viscosity at 135°C (cSt) | 280 | 470 | 529 | 565 | 574 | 574 | 632 | 672 |

It can be seen that the ring & ball softening temperature and the viscosity increase while the penetration decreases when adding hydrogen peroxide or calcium hypochlorite, which means that these oxidants cause hardening of the binder. The use of hydrogen peroxide allowed to convert the initial 70/100 bitumen into a 35/50 bitumen while the use of calcium hypochlorite allowed to convert the initial 50/70 bitumen into a 20/30 bitumen, meeting all specifications as per EN-12591.

The performance grading of the bituminous binder modified or not with hydrogen peroxide was also evaluated. The results are as follows.

| **Comparative example 1** | | |
|---|---|---|
| **Temperature °C** | G*/sin delta (Rutting parameter) | Specification |
| **46** | 8.3 kPa | Minimum 1 kPa for 25 mm plate, 1 mm gap at 10 rad/sec |
| **52** | 3.6 kPa | |
| **58** | **1.67 kPa** | |
| **64** | 0.7 kPa | |

| **After aging (RTFOT test)** | | |
|---|---|---|
| **58** | 6.75 kPa | Minimum 2.2 kPa for 25 mm plate, 1 mm gap at 10 rad/sec |

| **Example 1** | | |
|---|---|---|
| **Temperature °C** | G*/sin delta (Rutting parameter) | Specification |
| **52** | 17.7 kPa | Minimum 1 kPa for 25 mm plate, 1 mm gap at 10 rad/sec |
| **58** | 7.22 kPa | |
| **64** | 3.15 kPa | |
| **70** | **1.46 kPa** | |
| **76** | 0.71 kPa | |

| **After aging (RTFOT test)** | | |
|---|---|---|
| **70** | 4.62 kPa | Minimum 2.2 kPa for 25 mm plate, 1 mm gap at 10 rad/sec |

The temperature at which G*/sin delta less than 1.0 kPa was identified was 61.7°C (Fail temperature) for comparative example 1. Hence, the high temperature in the PG system for comparative example 1 was 58°C. The temperature at which G*/sin delta less than 1.0 kPa was identified was 73.1°C (Fail temperature) for example 1. Hence, the high temperature in the PG system for example 1 was 70°C.

It can be seen from the above tables that adding various oxidants to the bituminous binder resulted in improving the high temperature PG grade, which means a better resistance to rutting.

## Claims

1. A process for preparing a bituminous binder composition for making layers and/or coatings for road construction and/or civil engineering, comprising:
a) mixing a bituminous binder comprising an initial bitumen and at least one oxidizing agent,
b) obtaining a bituminous binder composition comprising a final bitumen.

2. A process according to claim 1, wherein the penetration grade of the final bitumen is decreased by at least one grade as defined in the EN-12591 standard as compared to the initial bitumen.

3. A process according to any one of the preceding claims, wherein the at least one oxidizing agent is a peroxide, hypochlorous acid or a salt thereof.

4. A process according to any one of the preceding claims, wherein the at least one oxidizing agent is hydrogen peroxide or a salt thereof.

5. A process according to claim 3, wherein the at least one oxidizing agent is a hypochlorite salt.

6. A process according to claim 4, wherein hydrogen peroxide or a salt thereof is added as an aqueous solution.

7. A process according to any one of the preceding claims, wherein the at least one oxidizing agent is used in an amount ranging from 0.5 to 20 % by weight, relative to the composition total weight.

8. A process according to any one of the preceding claims, wherein the bituminous binder contains a bitumen that represents from 25 to 100 %, preferably from 65 to 90 % of the bituminous binder total weight.

9. A process according to any one of the preceding claims, wherein said bituminous binder composition comes as an emulsion form.

10. A process according to any one of the preceding claims, wherein the bituminous binder composition further comprises an aggregate.

11. The use of at least one oxidizing agent for improving the resistance to permanent deformation of a bituminous binder.

12. The use of claim 11, wherein the bituminous binder penetration grade is decreased by at least one grade as defined in the EN-12591 standard.

13. The use of claim 11 or 12, wherein the at least one oxidizing agent is a peroxide, hypochlorous acid or a salt thereof.

14. A bituminous binder composition for making layers and/or coatings for road construction and/or civil engineering, comprising:
(a) bitumen, and
(b) at least one oxidizing agent.
